# EUROPÄISCHE PATENTANMELDUNG

(11) **EP 1 895 194 A2**
(43) Veröffentlichungstag der Anmeldung: **05.03.2008**
(21) Anmeldenummer: 07113339.1
(22) Anmeldetag: 27.07.2007
(51) Int. Cl.: F16H 35/00, F16H 27/00

(54) **Abtriebsschnittstelle**

(30) Priorität: 31.08.2006 DE 102006040741
(71) Anmelder: ROBERT BOSCH GMBH, 70442 Stuttgart (DE)
(72) Erfinder: Dommsch, Hans-Peter, 77839, Lichtenau (DE); Cettier, Daniel, 76137, Karlsruhe (DE)

(57) **Zusammenfassung**

Eine elektrische Antriebseinrichtung (1) weist einen Elektromotor (2) und eine Abriebsschnittstelle (3) mit einem Antriebselement (5) und einem Abtriebselement (6) auf. Dabei treibt der Elektromotor (2) über das Antriebselement (5) das Abtriebselement (6) an. Die Abtriebsschnittstelle (3) weist eine Arretierfunktion auf, wobei ein Arretierglied (8) des Antriebselements (5) zum Arretieren des Abtriebselements (6) so in ein Aufnahmeglied (10) des Abtriebselements (6) eingreift, dass eine Bewegung des Abtriebselements (6) blockiert ist und das Antriebselement (5) zum Freigeben der Arretierung bewegbar ist.

## Beschreibung

### Stand der Technik

Die Erfindung betrifft eine Abtriebsschnittstelle für elektrische Antriebe. Speziell betrifft die Erfindung eine Abtriebsschnittstelle für Hilfs- oder Stellantriebe für Kraftfahrzeuge, elektrisch betätigbare Tore oder Türen, Hebe- und Stelleinrichtungen oder dergleichen.

Aus der DE 100 19 512 A1 ist ein Elektromotor bekannt, der als Fensterheber- oder Schiebedachmotor ausgestaltet sein kann. Bei dem bekannten Elektromotor wird eine Welle angetrieben, die mit einem Getriebe in Wirkverbindung steht.

Bei einem Elektromotor, wie er aus der DE 100 19 512 A1 bekannt ist, kann zur Ansteuerung eine Elektronik vorgesehen sein. Dabei ist es denkbar, dass nach Erreichen einer gewissen Position ein Halten dieser Position auch nach dem Abschalten des Elektromotors erwünscht oder erforderlich ist. Eine solche Parkposition könnte über zusätzliche Elemente gehalten werden. Beispielsweise ist eine Art von Riegel denkbar, der fremdbetätigt in eine Raste des Getriebes fährt. Ein Halten der Parkposition kann auch durch ein entsprechend schwergängig ausgelegtes Getriebe erreicht werden, das heißt durch ein Getriebe mit einem Wirkungsgrad von beispielsweise weniger als 50 %, so dass eine Selbsthemmung erfolgt.

Diese Lösungen sind jedoch aufwändig und/oder führen zu einer erhöhten Baugröße der Getriebe-Antriebseinheit oder zumindest zu einem zusätzlichen Platzbedarf für weitere Halteelemente.

### Offenbarung der Erfindung

### Vorteilhafte Wirkungen

Die erfindungsgemäße Abtriebsschnittstelle mit den Merkmalen des Anspruchs 1 und die erfindungsgemäße elektrische Antriebseinrichtung mit den Merkmalen des Anspruchs 17 haben demgegenüber den Vorteil, dass eine zuverlässige und optimierte Arretierfunktion gewährleistet ist, die beispielsweise zum Halten eines Elements eines Kraftfahrzeugs in einer Parkposition oder zum Verriegeln einer Tür, eines Tors, einer Klappe oder dergleichen dienen kann.

Durch die in den Unteransprüchen aufgeführten Maßnahmen sind vorteilhafte Weiterbildungen der im Anspruch 1 angegebenen Abtriebsschnittstelle und der im Anspruch 17 angegebenen elektrischen Antriebseinrichtung möglich.

Im jeweiligen Anwendungsfall können die Abtriebsschnittstelle und die elektrische Antriebseinrichtung im Hinblick auf den benötigten Bauraum optimiert werden. Speziell kann ein zusätzliches Arretier- oder Blockierelement, das beispielsweise mit einem separaten Aktuator betätigbar ist, eingespart werden, da das Freigeben der Arretierung durch ein Bewegen des Antriebselements mittels des elektrischen Antriebs möglich ist. Nach dem Freigeben der Arretierung ist dann ein Antreiben des Abtriebselements über das Antriebselement durch den elektrischen Antrieb möglich. Steuervorgänge, die zur Koordinierung der zeitlichen Abfolge zur Betätigung einer separaten Blockiereinrichtung und zur Betätigung des Abtriebselements mittels des elektrischen Antriebs dienen, können ebenfalls entfallen, so dass die Zuverlässigkeit verbessert und der Betrieb vereinfacht ist.

Vorteilhaft ist es, dass das Arretierglied des Antriebselements eine konvexe Stirnfläche aufweist und dass das Aufnahmeglied des Abtriebselements eine an die konvexe Stirnfläche des Arretierglieds angepasste konkave Stirnfläche aufweist, wobei das Antriebselement zum Arretieren des Abtriebselements so bewegbar ist, dass sich die beiden Stirnflächen zumindest teilweise gegenüber liegen. Dadurch wird eine formschlüssige Blockierung einer möglichen Bewegung des Abtriebselements erreicht, so dass das Abtriebselement arretiert ist.

Ferner ist es vorteilhaft, dass das Arretierglied des Antriebselements an seiner konvexen Stirnfläche einen Krümmungsradius aufweist, der einem beim Drehen des Arretierglieds vorgegebenen Drehradius entspricht und dass der Krümmungsradius der konkaven Stirnfläche abgesehen vom Vorzeichen ebenfalls gleich diesem Drehradius ist. Dadurch werden auch geringfügige Bewegungen des Abtriebselements blockiert. Die konvexe Stirnfläche des Arretierglieds kann allerdings auch stärker gekrümmt sein als die konkave Stirnfläche des Aufnahmeglieds, wodurch ein gewisser Toleranzausgleich ermöglicht ist. Speziell ist es gegebenenfalls zu aufwändig oder nicht möglich, das Abtriebselement exakt in eine definierte Stellung zu bewegen, in der mittels des Arretierglieds eine Arretierung bewirkt wird. Somit kann dann auch eine Arretierung des Abtriebselements erfolgen, selbst wenn das Abtriebselement nur in etwa in der Position angeordnet ist, in der es nachfolgend durch Eingreifen des Arretierglieds in das Aufnahmeglied des Abtriebselements blockiert wird.

Vorteilhaft ist es, dass das Antriebselement ein Antriebs-Zahnrad aufweist und dass das Abtriebselement ein Abtriebs-Zahnrad aufweist, wobei das Antriebs-Zahnrad einen verzahnungsfreien Abschnitt umfasst, der so angeordnet ist, dass das Antriebselement zum Freigeben der Arretierung des Abtriebselements bewegbar ist, und wobei das Antriebs-Zahnrad einen Verzahnungsabschnitt umfasst, der so angeordnet ist, dass das Antriebselement bei freigegebener Arretierung zum Antreiben des Abtriebselements mittels des Verzahnungsabschnitts des Antriebs-Zahnrads auf das Abtriebs-Zahnrad einwirkt. Dadurch wird in vorteilhafter Weise eine Bewegbarkeit des Antriebselements ermöglicht, wobei ausgehend von einer Arretierstellung zunächst ein Lösen der Arretierung und dann ein Eingreifen des Antriebs-Zahnrades in das Abtriebs-Zahnrad zum Antreiben des Abtriebs erfolgt. Um bei diesem Eingriff ein Blockieren der Abtriebsschnittstelle zu verhindern, das beispielsweise bei relativ großen Toleranzen hinsichtlich der Positionierung des Abtriebselements relativ zu dem Antriebselement im arretierten Zustand möglich ist, kann das Antriebs-Zahnrad und/oder das Abtriebs-Zahnrad geeignet modifiziert werden. Vorzugsweise wird das Antriebs-Zahnrad modifiziert, indem zumindest ein Zahn hinsichtlich seiner Zahngeometrie modifiziert wird. Mögliche Modifikationen können dabei durch eine Kopfrücknahme und/oder geeignete Verrundungen erfolgen.

Vorteilhaft ist es, dass das Antriebselement ein Ritzel mit einem verzahnungsfreien Abschnitt aufweist und dass das Abtriebselement ein Kronrad aufweist, wobei der verzahnungsfreie Abschnitt so am Ritzel angeordnet ist, dass das Antriebselement zum Freigeben der Arretierung bewegbar ist, und dass das Ritzel einen Verzahnungsabschnitt aufweist, der so angeordnet ist, dass das Antriebselement bei freigegebener Arretierung mittels des Verzahnungsabschnitts des Ritzels auf das Kronrad des Abtriebselements einwirkt, um das Abtriebselement anzutreiben. Dabei ist es ferner vorteilhaft, dass das Ritzel an einem Ende des Verzahnungsabschnitts, an dem das Ritzel bei freigegebener Arretierung in Eingriff mit dem Kronrad gelangt, an zumindest einem Zahn eine modifizierte Zahngeometrie aufweist. Durch die Ausgestaltung mit Ritzel und Kronrad besteht die Möglichkeit, dass der Elektromotor und eine Welle des Abtriebs in einem gewissen Winkel zueinander angeordnet werden.

In vorteilhafter Weise weist das Antriebselement einen Kurbelzapfen auf, der jeweils in einen von mehreren nebeneinander angeordneten Führungsschlitzen des Abtriebselements eingreift, um das Abtriebselement anzutreiben, wobei eine Drehbewegung in eine Translationsbewegung umgesetzt wird. Das Arretierglied kann dabei in jeweils zwischen den Führungsschlitzen vorgesehene, an Zähnen des Abtriebselements ausgebildete Aufnahmeglieder eingreifen, um die Arretierfunktion zu ermöglichen.

Um beim Anlegen der Verzahnung, die nach dem Freigeben der Arretierung erfolgen kann, einen Schlag zwischen den Verzahnungen zu vermeiden, wird vorzugsweise der erste Kontakt mit reduzierter Drehgeschwindigkeit hergestellt.

Hierfür ist es vorteilhaft, dass ein Steuergerät einen Kontakt durch Erfassen eines ansteigenden Motorstroms oder der Motorposition erkennt, um den Übergang von der reduzierten zu der gewünschten Drehzahl beziehungsweise dem gewünschten Drehmoment zu steuern. Das Steuergerät kann auch eine Fehlfunktion, insbesondere ein Verhaken, feststellen, das beispielsweise auftritt, wenn zwei Zähne der beteiligten Zahnräder mit ihren Köpfen aufeinander treffen und die Verzahnung blockieren, und durch entsprechende Strategien ein Enthaken gewährleisten, indem zum Beispiel eine kurzzeitige Drehrichtungsänderung erfolgt.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 eine elektrische Antriebseinrichtung mit einer Abtriebsschnittstelle in einer schematischen Darstellung entsprechend einem ersten Ausführungsbeispiel der Erfindung in einer ersten Drehstellung;
Fig. 2 die in Fig. 1 dargestellte elektrische Antriebseinrichtung in einer zweiten Drehstellung;
Fig. 3 die in Fig. 1 dargestellte elektrische Antriebseinrichtung in einer dritten Drehstellung;
Fig. 4 eine Abtriebsschnittstelle einer elektrischen Antriebseinrichtung entsprechend einem zweiten Ausführungsbeispiel der Erfindung;
Fig. 5 eine Abtriebsschnittstelle einer elektrischen Antriebseinrichtung entsprechend einem dritten Ausführungsbeispiel der Erfindung in einer ersten Stellung;
Fig. 6 die in Fig. 5 dargestellte Abtriebsschnittstelle in einer zweiten Stellung;
Fig. 7 die in Fig. 5 dargestellte Abtriebsschnittstelle in einer dritten Stellung und
Fig. 8 die in Fig. 5 dargestellte Abtriebsschnittstelle in einer vierten Stellung.

### Ausführungsformen der Erfindung

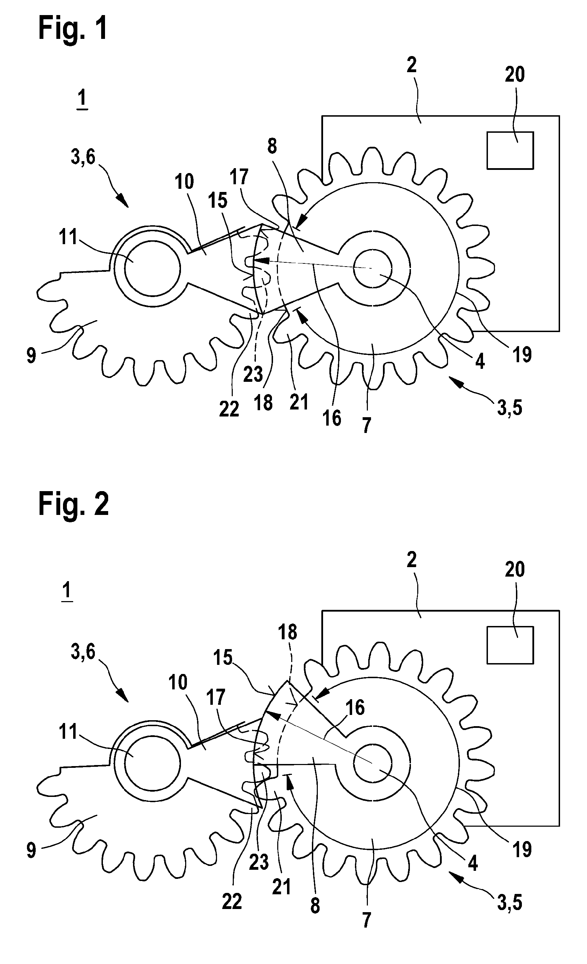

Fig. 1 zeigt ein erstes Ausführungsbeispiel einer elektrischen Antriebseinrichtung 1 mit einem Elektromotor 2 und einer Abtriebsschnittstelle 3. Die elektrische Antriebseinrichtung 1 kann insbesondere als elektrischer Hilfs- oder Stellantrieb für eine elektrische Servo-Lenkung oder zur fremdkraftbetätigten Verstellung von Elementen eines Kraftfahrzeugs dienen. Speziell kann die elektrische Antriebseinrichtung 1 zur Hub- und Höhenverstellung eines Schiebe- oder Faltdaches oder dergleichen dienen. Die elektrische Antriebseinrichtung 1 eignet sich auch zum fremkraftbetätigten Öffnen und Schließen von Türen, insbesondere Haustüren, und Toren, insbesondere Einfahrts- und Garagentoren. Beispielsweise kann die elektrische Antriebseinrichtung 1 in ein Türscharnier eines Hoftors integriert werden. Durch die von der Abtriebsschnittstelle 3 der elektrischen Antriebseinrichtung 1 gewährleistete Arretierfunktion können dabei Verriegelungsmittel, Türschlösser oder dergleichen eingespart werden. Die elektrische Antriebseinrichtung 1 eignet sich ferner für Hebe- und Stelleinrichtungen. Die elektrische Antriebseinrichtung 1 und die Abtriebsschnittstelle 3 eignen sich jedoch auch für andere Anwendungsfälle.

Der Elektromotor 2 weist eine Welle 4 auf, die mit einem Antriebselement 5 der Abtriebsschnittstelle 3 verbunden ist. Das Antriebselement 5 dient zum Antreiben eines Abtriebselements 6 der Abtriebsschnittstelle 3. In dem dargestellten Ausführungsbeispiel weist das Antriebselement 5 ein Antriebs-Zahnrad 7 und ein Arretierglied 8 auf. Ferner weist das Abtriebselement 6 ein Abtriebs-Zahnrad 9 und ein Aufnahmeglied 10 auf. Die in der Darstellung durch das Arretierglied 8 und das Aufnahmeglied 10 verdeckten Teile des Antriebs-Zahnrades 7 und des Abtriebs-Zahnrades 9 sind dabei durch jeweils eine unterbrochen dargestellte Linie veranschaulicht. Das Abtriebselement 6 ist mit einer Abtriebswelle 11 verbunden, die direkt oder über ein nicht dargestelltes Getriebe auf das zu betätigende Element einwirkt.

Die Welle 4 des Elektromotors 2 und die Abtriebswelle 11 sind koaxial zueinander angeordnet. Ferner sind das Arretierglied 8 und das Antriebs-Zahnrad 7 des Antriebselements 5 starr zueinander angeordnet. Entsprechend sind auch das Aufnahmeglied 10 und das Abtriebs-Zahnrad 9 des Abtriebselements 6 starr zueinander angeordnet.

Das Arretierglied 8 weist eine konvexe Stirnfläche 15 auf, wobei die konvexe Stirnfläche 15 in Bezug auf eine durch die Welle 4 gegebene Drehachse einen Krümmungsradius 16 hat, der gleich einem beim Drehen des Arretierglieds 8 um die Drehachse der Welle 4 gegebenen Drehradius für die Stirnfläche 15 ist. Ferner weist das Aufnahmeglied 10 eine an die konvexe Stirnfläche 15 des Arretierglieds 8 angepasste konkave Stirnfläche 17 auf, die eine der Krümmung der konvexen Stirnfläche 15 entsprechende Krümmung aufweist, wobei der Krümmungsradius abgesehen vom Vorzeichen gleich dem Krümmungsradius 16 ist.

In der Fig. 1 ist ein Fall dargestellt, in dem eine Bewegung des Abtriebselements 6 blockiert ist. Dabei greift das Arretierglied 8 vollständig in das Aufnahmeglied 10 ein, so dass die konvexe Stirnfläche 15 des Arretierglieds 8 der konkaven Stirnfläche 17 des Aufnahmeglieds 10 gegenüber liegt. In dieser Stellung ist ein Drehen des Aufnahmeglieds 10 um die durch die Abtriebswelle 11 definierte Drehachse auf Grund der gegebenen formschlüssigen Verbindung zwischen dem Arretierglied 8 und dem Aufnahmeglied 10 nicht möglich. Da das Abtriebs-Zahnrad 9 fest mit dem Aufnahmeglied 10 verbunden ist, ist das gesamte Abtriebselement 6 der Abtriebsschnittstelle 3 blockiert.

Allerdings ist eine Bewegung des Arretierglieds 8 um die durch die Welle 4 definierte Drehachse bei stehendem Aufnahmeglied 10 möglich, was einem Drehen oder Schwenken des Arretierglieds 8 entspricht. Hierfür weist das Antriebs-Zahnrad 7 einen verzahnungsfreien Abschnitt 18 auf, so dass die Bewegung des Antriebselements 5 nicht durch eine Wechselwirkung zwischen dem Antriebs-Zahnrad 7 und dem Abtriebs-Zahnrad 9 blockiert wird. Der verzahnungsfreie Abschnitt 18 des Antriebs-Zahnrades 7 ist dabei so angeordnet, dass das Antriebselement 5 zum Freigeben der Arretierung des Abtriebselements 6 bewegbar ist, so dass sich die konvexe Stirnfläche 15 und die konkave Stirnfläche 17 höchstens noch teilweise überlappen.

Fig. 2 zeigt die elektrische Antriebseinheit 1 mit der Abtriebsschnittstelle 3 des ersten Ausführungsbeispiels in einer zweiten Drehstellung. Das Antriebs-Zahnrad 7 weist einen Verzahnungsabschnitt 19 auf. Dabei ist in der Fig. 2 ein Moment dargestellt, in dem das Antriebs-Zahnrad 7 in Eingriff mit dem Abtriebs-Zahnrad 9 gelangt. Das Arretierglied 8 ist dabei gegenüber dem Aufnahmeglied 10 so weit verdreht, dass eine Bewegung des Aufnahmeglieds 10 ermöglicht ist, wodurch die Arretierung des Abtriebselements 6 gerade freigegeben ist. Dabei greift das Antriebs-Zahnrad 7 an einem Ende des Verzahnungsabschnitts 19 in das Abtriebs-Zahnrad 9 ein. Um ein allzu heftiges Eingreifen oder einen Schlag zwischen den Zahnrädern 7, 9 zu verhindern, steuert ein Steuergerät 20, das zum Steuern des Elektromotors 2 dient, die Bewegung des Antriebselements 5 zum Freigeben der Arretierung so, dass sich das Antriebs-Zahnrad 7 mit reduzierter Drehzahl dreht. Dabei erfasst das Steuergerät 20 den Motorstrom des Elektromotors 2 oder eine Drehwinkelstellung der Welle 4, um nach dem Eingreifen des Antriebs-Zahnrades 7 in das Abtriebs-Zahnrad 9 das Drehmoment des Elektromotors 2 oder die Drehzahl des Elektromotors 2 zu erhöhen. Alternativ oder zusätzlich können an zumindest einem Ende des Verzahnungsabschnittes 19 Modifikationen an einem oder mehreren Zahnrädern des Antriebs-Zahnrades 7 vorgenommen werden, um ein gegenseitiges Blockieren der Zahnräder 7, 9 zu verhindern. Ein solches Blockieren kann beispielsweise durch das Auftreffen eines Zahnkopfes 21 des Antriebs-Zahnrades 7 auf einen Zahnkopf 22 des Abtriebs-Zahnrades 9 verursacht werden. Beispielsweise ist eine Kopfrücknahme an Zähnen möglich, wie es in der Fig. 2 dargestellt ist. Hierbei ist an dem Zahnkopf 22 eine Kopfrücknahme ausgeführt, so dass der Zahnkopf 21 des Antriebs-Zahnrades 7 ungehindert seitlich an dem folgenden Zahnkopf 23 angreifen kann.

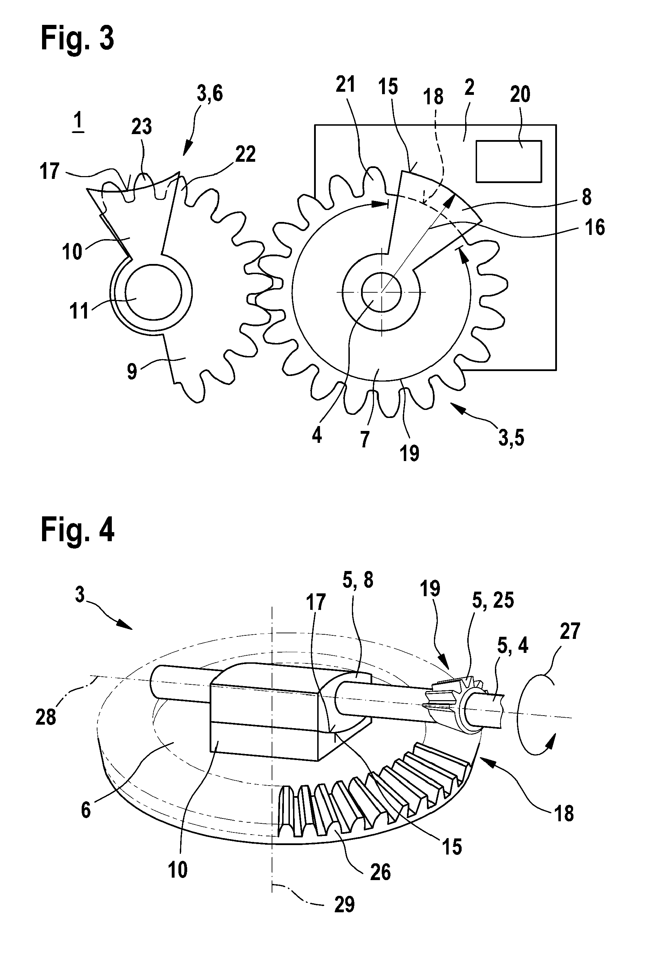

Fig. 3 zeigt die elektrische Antriebseinrichtung 1 mit der Abtriebsschnittstelle 3 in einer dritten Drehstellung. Diese dritte Drehstellung entspricht dabei einem Moment während des gewöhnlichen Betriebs der elektrischen Antriebseinrichtung 1 zum Betätigen eines Elements eines Kraftfahrzeugs oder dergleichen. Die Arretierung des Abtriebselements 6 ist dabei freigegeben und außerdem befinden sich die Zahnräder 7, 9 miteinander im Eingriff, wobei das Steuergerät 20 den Elektromotor 2 so ansteuert, dass das benötigte Drehmoment oder die benötigte Drehzahl erreicht ist. Ein Betrieb mit reduziertem Drehmoment oder reduzierter Drehzahl, wie es beim anfänglichen Anlegen der Flanken der Zähne der Zahnräder 7, 9 aneinander erfolgt, wie es anhand der Fig. 2 beschrieben ist, ist bei dem in der Fig. 3 dargestellten Betrieb nicht erforderlich.

Falls ein Lösen der Arretierung mit reduziertem Drehmoment des Elektromotors 2 nicht möglich ist, dann kann das Steuergerät 20 mehrere Strategien zum Lösen der Arretierung bereitstellen. Beispielsweise kann sich bei einer Beaufschlagung des Abtriebselements 6 eine relativ hohe Reibungskraft zwischen den Stirnflächen 15, 17 ergeben, die zum Lösen der Arretierung zu überwinden ist. Ferner können durch Verunreinigungen, insbesondere Verklebungen, zusätzliche Kräfte entstehen, die das Lösen der Arretierung erschweren. Neben der Erhöhung des zum Lösen der Arretierung erforderlichen Drehmoments des Elektromotors 2 kann das Steuergerät 20 auch mehrere Male schnell hintereinander die Drehrichtung des Elektromotors 2 und somit die Richtung der Beaufschlagung des Arretierglieds 8 ändern. Das Steuergerät 20 kann dabei den Motorstrom des Elektromotors 2 überwachen, um gegebenenfalls das Drehmoment des Elektromotors 2 vor dem Aufeinandertreffen der Zahnflanken der Zahnräder 7, 9 wieder zu reduzieren.

Fig. 4 zeigt eine Abtriebsschnittstelle 3 einer elektrischen Antriebseinrichtung 1 entsprechend einem zweiten Ausführungsbeispiel der Erfindung. In diesem Ausführungsbeispiel treibt ein dem Elektromotor 2 entsprechender Elektromotor eine Welle 4 eines Antriebselements 5 an. Das Antriebselement 5 weist außerdem ein Ritzel 25 auf, das starr mit der Welle 5 verbunden ist. Ferner ist die Welle 4 starr mit einem Arretierglied 8 verbunden, wobei in der dargestellten Arretierstellung die konvexe Stirnfläche 15 des Arretierglieds 8 der konkaven Stirnfläche 17 des Aufnahmeglieds 10 des Abtriebselements 6 gegenüber liegt. Das Abtriebselement 6 weist außerdem ein Kronrad 26 auf, das mit dem Ritzel 25 in Eingriff bringbar ist, wobei in der dargestellten Ausgangslage ein verzahnungsfreier Abschnitt 18 des Ritzels 25 dem Kronrad 26 zugewandt ist, um durch ein Drehen der Welle 4 des Antriebselements 5, das in der Drehrichtung 27 erfolgen kann, zunächst ein Lösen der Arretierung zu ermöglichen. Nach dem Lösen der Arretierung greift das Ritzel 25 mit seinem Verzahnungsabschnitt 19 in die Zähne des Kronrades 26 ein, um das Kronrad 26 in Bewegung zu versetzen, um dadurch ein Element eines Kraftfahrzeugs oder dergleichen zu betätigen.

Bei dem in Fig. 4 dargestellten zweiten Ausführungsbeispiel der Abtriebsschnittstelle 3 wird eine Übertragung des Moments des Elektromotors 2 ermöglicht, wobei eine Achse 28 der Welle 4 des Elektromotors einen gewissen Winkel zu einer Drehachse 29 des Kronrades 26 des Abtriebselements 6 einschließt.

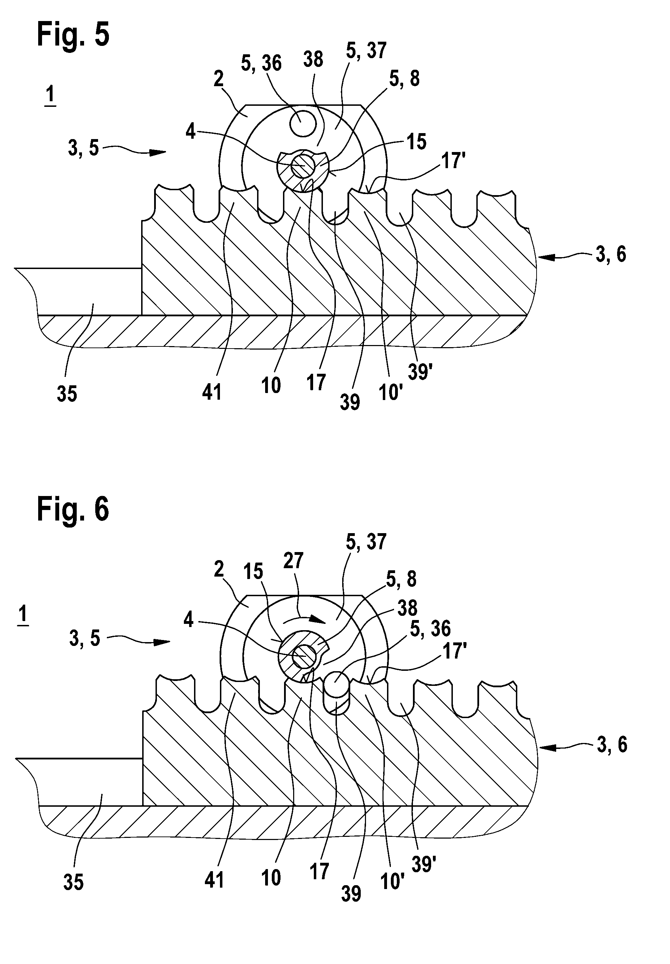

Fig. 5 zeigt eine Abtriebsschnittstelle 3 einer elektrischen Antriebseinrichtung 1 entsprechend einem dritten Ausführungsbeispiel der Erfindung in einer ersten Stellung. Bei diesem Ausführungsbeispiel ist das Abtriebselement 6 der Abtriebsschnittstelle 3 auf einer Schiene 35 gelagert. Dabei wird eine Drehbewegung der Welle 4 des Elektromotors 2 in eine translatorische, das heißt lineare, Bewegung des auf der Schiene 35 geführten Abtriebselements 6 umgesetzt. Das Abtriebselement 6 weist in diesem Ausführungsbeispiel mehrere nebeneinander angeordnete Aufnahmeglieder 10, 10' auf, von denen in der Fig. 5 die Aufnahmeglieder 10, 10' gekennzeichnet sind. Jedes dieser Aufnahmeglieder 10, 10' weist eine konkave Stirnfläche 17, 17' auf, von denen in der Fig. 5 die konkaven Stirnflächen 17, 17' gekennzeichnet sind. Die konkaven Stirnflächen 17, 17' der Aufnahmeglieder 10, 10' sind jeweils an die konvexe Stirnfläche 15 eines als Sperrscheibe ausgestalten Arretierglieds 8 angepasst. Das Arretierglied 8 greift dabei in der in der Fig. 5 dargestellten ersten Stellung vollständig in das Aufnahmeglied 10 ein, so dass eine Arretierung des Abtriebselements 6 gewährleistet ist. Ein Kurbelzapfen 36 des Antriebselements 5 ist axial versetzt zu der Welle 4 angeordnet. Der Kurbelzapfen 36 ist dabei über eine Scheibe 37 des Antriebselements 5 mit der Welle 4 verbunden. Das Arretierglied 8 kann gegebenenfalls auch beabstandet zu der Scheibe 37 mit der Welle 4 verbunden sein, wobei ein Freigabebereich 38 des Arretierglieds 8 den Kurbelzapfen 36 in jeder beliebigen Drehstellung der Welle 4 fest zugeordnet ist. Die konvexe Stirnfläche 15 bildet einen Arretierabschnitt des Arretierglieds 8, der zum Blockieren des Abtriebselements 6 mit einem der Aufnahmeglieder 10, 10' zusammenwirkt.

Zum Freigeben der Arretierung erfolgt eine Betätigung des Elektromotors 2, wodurch sich das Antriebselement 5 beispielsweise in einer in der Fig. 6 dargestellten Drehrichtung 27 dreht.

Fig. 6 zeigt die Abtriebsschnittstelle 3 der elektrischen Antriebseinrichtung 1 in einer zweiten Drehstellung, die ausgehend von der in der Fig. 5 dargestellten ersten Drehstellung durch Drehen des Antriebselements 5 in der Drehrichtung 27 erreicht wird. Das Abtriebselement 6 weist mehrere nebeneinander angeordnete Führungsschlitze 39, 39' auf, von denen in der Fig. 6 die Führungsschlitze 39, 39' gekennzeichnet sind. In der in Fig. 6 dargestellten zweiten Drehstellung greift der Kurbelzapfen 36 des Antriebselements 5 gerade in den Führungsschlitz 39 des Abtriebselements 6 ein. Außerdem ist der Freigabebereich 38 bereits teilweise dem Aufnahmeglied 10 zugeordnet, so dass die Arretierung des Abtriebselements 6 freigegeben ist. Der Freigabebereich 38 ist dabei so ausgestaltet, dass der Kurbelzapfen 36 bereits ausreichend weit in einen der Führungsschlitze 39, 39' eingreift, um bei einer externen Beaufschlagung des Abtriebselements 6 ein versehentliches Durchrutschen des Abtriebselements 6 zu verhindern.

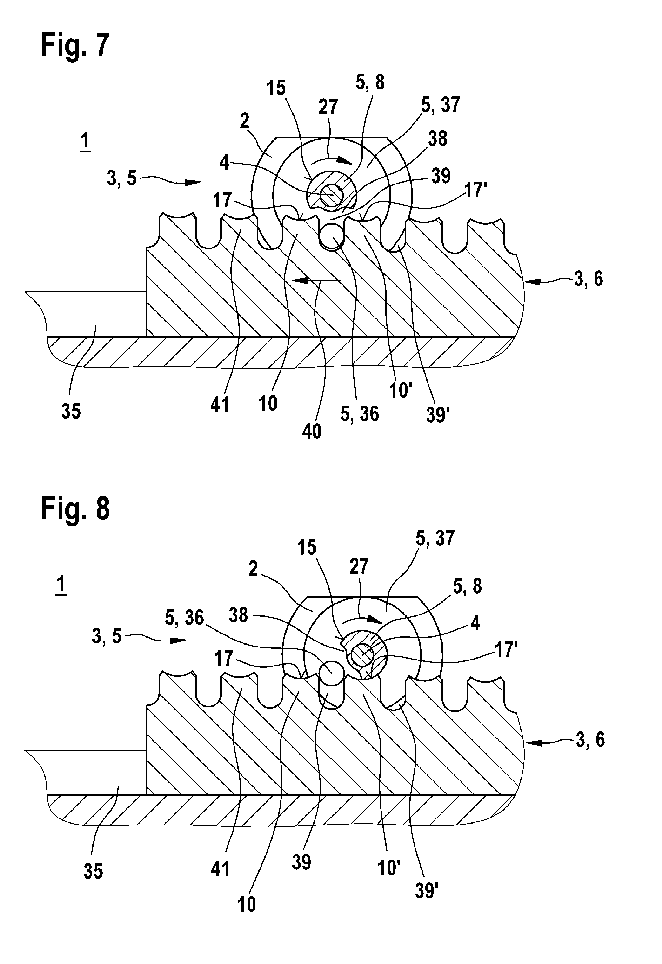

Bei fortschreitender Drehung der Welle 4 erfolgt eine Translation des Abtriebselements 6 der Abtriebsschnittstelle 3, das von der Schiene 35 geführt ist, in einer in der Fig. 7 dargestellten Richtung 40.

Fig. 7 zeigt die elektrische Antriebseinrichtung 1, wobei sich die Abtriebsschnittstelle 3 in einer dritten Stellung befindet, die während der durch den Elektromotor 2 bewirkten Translationsbewegung des Abtriebselements 6 angenommen wird. Dabei greift der Kurbelzapfen 36 des Antriebselements 5 im Wesentlichen vollständig in den Führungsschlitz 39 ein.

Fig. 8 zeigt die elektrische Antriebseinrichtung 1 mit der Abtriebsschnittstelle 3 in einer vierten Stellung. In dieser vierten Stellung greift das Arretierglied 8 an der konvexen Stirnfläche 15 gerade wieder so weit in die konkave Stirnfläche 17' des Aufnahmeglieds 10', das dem Aufnahmeglied 10 folgt, ein, dass eine Arretierung des Abtriebselements 6 wirksam wird. In dieser Stellung befindet sich der Kurbelzapfen 36 noch so weit in dem Führungsschlitz 39, dass ein Durchrutschen des Abtriebselements 6 auf Grund einer externen, auf das Abtriebselement 6 einwirkenden Kraft verhindert ist. Nachfolgend wird dann eine vollständige Arretierung durch ein weitgehendes Eingreifen des Arretierglieds 8 in das Aufnahmeglied 10' erreicht, so dass beim Austritt des Kurbelzapfens 36 aus dem Führungsschlitz 39 die Arretierung des Abtriebselements 6 wirksam ist. Bei fortschreitender Drehung der Welle 4 in der Drehrichtung 27 wird eine der Fig. 5 entsprechende Stellung erreicht, wobei das Abtriebselement 6 einen Schritt in der Richtung 40 weiter fortgeschritten ist. Wenn dann die Drehrichtung 27 beibehalten wird, um einen weiteren Schritt des Abtriebselements 6 in der Richtung 40 auszuführen, dann greift der Kurbelzapfen 36 hierbei in den Führungsschlitz 39', der dem Führungsschlitz 39 folgt. Dabei kann jedoch auch eine der Drehrichtung 27 entgegen gesetzte Drehrichtung gewählt werden, um das Abtriebselement 6 schrittweise entgegen der Richtung 40 zu verschieben.

Das Arretierglied 8, insbesondere der Freigabebereich 38 des Arretierglieds 8, ist so ausgestaltet, dass eine Bewegung des Abtriebselements 6 blockiert ist, wenn der Kurbelzapfen 36 in keinem der Führungsschlitze 39, 39' wirksam ist, das heißt in keinen der Führungsschlitze 39, 39' eingreift. Ferner ist das Arretierglied 8 und insbesondere der Freigabebereich 38 des Arretierglieds 8 so ausgestaltet, dass die Arretierung des Abtriebselements 6 freigegeben ist, wenn der Kurbelzapfen 36 zumindest im Wesentlichen in einen der Führungsschlitze 39, 39' eingreift, so dass eine schrittweise Bewegung des Abtriebselements 6 ermöglicht ist, wobei ein Durchrutschen des Abtriebselements 6 auf Grund der Motorkraft des Elektromotors 2 verhindert ist. Bei dem anhand der Fig. 5 bis 8 beschriebenen dritten Ausführungsbeispiel wird das Abtriebselement 6 schrittweise und linear bewegt, wobei die Bewegung in der Richtung 40 oder entgegen der Richtung 40 erfolgt.

In dem dargestellten Ausführungsbeispiel weist das Arretierglied 8 einen durch die konvexe Stirnfläche 15 gebildeten Arretierabschnitt und einen Freigabeabschnitt 38 auf. Es können jedoch auch mehrere Arretierabschnitte und Freigabeabschnitte vorgesehen sein. Die Aufnahmeglieder 10, 10' sind vorzugsweise an Zähnen 41, von denen in der Fig. 1 nur der Zahn 41 gekennzeichnet ist, vorgesehen, wobei die Zähne 41 die Führungsschlitze 39, 39' voneinander trennen. Der Radius des als Arretierscheibe ausgestalteten Arretierglieds 8, das heißt der Radius der konvexen Stirnfläche 15, entspricht vorzugsweise der Krümmung der konkaven Stirnfläche 17, 17' der Aufnahmeglieder 10, 10'. Das heißt, der Betrag des Krümmungsradius der konkaven Stirnfläche 17 ist vorzugsweise gleich dem Radius des als Arretierscheibe ausgebildeten Arretierglieds 8. Der Freigabebereich 38 kann dann als Aussparung in der Arretierscheibe ausgebildet sein.

Die Erfindung ist nicht auf die beschriebenen Ausführungsbeispiele beschränkt.

## Patentansprüche

1. Abtriebsschnittstelle (3) mit Arretierfunktion für elektrische Antriebe, insbesondere für elektrische Hilfs- oder Stellantriebe, mit einem Antriebselement (5) und einem Abtriebselement (6), wobei das Antriebselement (5) zum Antreiben des Abtriebselements (6) dient,
**dadurch gekennzeichnet,**
**dass** das Antriebselement (5) zumindest ein Arretierglied (8) aufweist, dass das Abtriebselement (6) zumindest ein Aufnahmeglied (10) aufweist, dass das Arretierglied (8) des Antriebselements (5) zum Arretieren des Abtriebselements (6) so in das Aufnahmeglied (10) des Abtriebselements (6) eingreift, dass eine Bewegung des Abtriebselements (6) blockiert ist und das Antriebselement (5) zum Freigeben der Arretierung bewegbar ist.

2. Abtriebsschnittstelle nach Anspruch 1,
**dadurch gekennzeichnet,**
**dass** das Arretierglied (8) des Antriebselements (5) eine konvexe Stirnfläche (15) aufweist, dass das Aufnahmeglied (10) des Abtriebselements (6) eine konkave Stirnfläche (17) aufweist, die an die konvexe Stirnfläche (15) des Arretierglieds (8) angepasst ist, und dass das Antriebselement (5) zum Arretieren des Abtriebselements (6) so bewegbar ist, dass die konvexe Stirnfläche (15) des Arretierglieds (8) zumindest teilweise der konkaven Stirnfläche (17) des Aufnahmeglieds (10) gegenüber liegt.

3. Abtriebsschnittstelle nach Anspruch 2,
**dadurch gekennzeichnet,**
**dass** das Arretierglied (8) des Antriebselements (5) mittels einer Bewegung des Antriebselements (5) drehbar ist und dass ein Krümmungsradius der konvexen Stirnfläche (15) des Arretierglieds (8) zumindest näherungsweise einem beim Drehen des Arretierglieds (8) für die konvexe Stirnfläche (15) gegebenen Drehradius entspricht und dass ein Betrag des Krümmungsradiuses der konkaven Stirnfläche (17) des Aufnahmeglieds (10) zumindest näherungsweise gleich einem Betrag des Krümmungsradiuses der konvexen Stirnfläche (15) des Arretierglieds (8) ist.

4. Abtriebsschnittstelle nach einem der Ansprüche 1 bis 3,
**dadurch gekennzeichnet,**
**dass** das Antriebselement (5) ein Antriebs-Zahnrad (7) aufweist, dass das Abtriebselement (6) ein Abtriebs-Zahnrad (9) aufweist, dass das Antriebs-Zahnrad (7) zumindest einen verzahnungsfreien Abschnitt (18) aufweist, der so angeordnet ist, dass das Antriebselement (5) zum Freigeben der Arretierung des Abtriebselements (6) bewegbar ist, und dass das Antriebs-Zahnrad (7) zumindest einen Verzahnungsabschnitt (19) aufweist, der so angeordnet ist, dass das Antriebselement (5) bei freigegebener Arretierung zum Antreiben des Abtriebselements (6) mittels des Verzahnungsabschnitts (19) des Antriebs-Zahnrades (7) auf das Abtriebs-Zahnrad (9) des Abtriebselements (6) einwirkt.

5. Abtriebsschnittstelle nach Anspruch 4,
**dadurch gekennzeichnet,**
**dass** das Antriebs-Zahnrad (7) an zumindest einem Ende des Verzahnungsabschnitts (19), an dem das Antriebs-Zahnrad (7) bei freigegebener Arretierung in Eingriff mit dem Abtriebs-Zahnrad (9) gelangt, an zumindest einem Zahn eine modifizierte Zahngeometrie, insbesondere eine Kopfrücknahme und/oder eine Verrundung, aufweist.

6. Abtriebsschnittstelle nach einem der Ansprüche 1 bis 3,
**dadurch gekennzeichnet,**
**dass** das Antriebselement (5) ein Ritzel (25) aufweist, dass das Abtriebselement (6) ein Kronrad (26) aufweist, dass das Ritzel (25) zumindest einen verzahnungsfreien Abschnitt (18) aufweist, der so angeordnet ist, dass das Antriebselement (5) zum Freigeben der Arretierung des Abtriebselements (6) bewegbar ist, und dass das Ritzel (25) zumindest einen Verzahnungsabschnitt (19) aufweist, der so angeordnet ist, dass das Antriebselement (6) bei freigegebener Arretierung zum Antreiben des Abtriebselements (6) mittels des Verzahnungsabschnittes (19) des Ritzels (25) auf das Kronrad (26) des Abtriebselements (6) einwirkt.

7. Abtriebsschnittstelle nach Anspruch 6,
**dadurch gekennzeichnet,**
**dass** das Ritzel (25) an zumindest einem Ende des Verzahnungsabschnitts (19), an dem das Ritzel (25) bei freigegebener Arretierung in Eingriff mit dem Kronrad (26) gelangt, an zumindest einem Zahn eine modifizierte Zahngeometrie, insbesondere eine Kopfrücknahme und/oder Verrundung, aufweist.

8. Abtriebsschnittstelle nach einem der Ansprüche 1 bis 3,
**dadurch gekennzeichnet,**
**dass** das Antriebselement (5) einen Kurbelzapfen (36) aufweist, dass das Abtriebselement (6) mehrere nebeneinander angeordnete Führungsschlitze (39) aufweist, wobei der Kurbelzapfen (36) des Antriebselements (5) zum Antreiben des Abtriebselements (6) in einen der Führungsschlitze (39) eingreift.

9. Abtriebsschnittstelle nach Anspruch 8,
**dadurch gekennzeichnet,**
**dass** das Arretierglied (8) so ausgestaltet ist, dass eine Bewegung des Abtriebselements (6) blockiert ist, wenn der Kurbelzapfen (36) in keinen der Führungsschlitze (39) eingreift, und die Arretierung freigegeben ist, wenn der Kurbelzapfen (36) zumindest im Wesentlichen in einen der Führungsschlitze (39) eingreift.

10. Abtriebsschnittstelle nach Anspruch 8 oder 9,
**dadurch gekennzeichnet,**
**dass** das Abtriebselement (6) mittels des Antriebselements (5) zumindest im Wesentlichen linear bewegbar ist.

11. Abtriebsschnittstelle nach Anspruch 10,
**dadurch gekennzeichnet,**
**dass** das Antriebselement (5) zum schrittweisen Bewegen des Abtriebselements (6) dient, wobei das Arretierglied (8) die Bewegung des Antriebselements (5) zwischen den schrittweisen Bewegungen blockiert.

12. Abtriebsschnittstelle nach Anspruch 11,
**dadurch gekennzeichnet,**
**dass** das Abtriebselement (6) mehrere Aufnahmeglieder (10, 10') aufweist, dass das Arretierglied (8) als Arretierscheibe ausgebildet ist, dass die Arretierscheibe zumindest einen dem Kurbelzapfen (36) zugeordneten Freigabebereich (38) und zumindest einen Arretierabschnitt (15) aufweist, dass die Arretierscheibe so angeordnet ist, dass der Arretierabschnitt (15) zum Arretieren des Abtriebselements (6) in eines der Aufnahmeglieder (10, 10') des Abtriebselements (6) eingreift, und dass zum Freigeben der Arretierung der Freigabebereich (38) des Arretierglieds (8) das Aufnahmeglied (10, 10') freigibt.

13. Abtriebsschnittstelle nach Anspruch 12,
**dadurch gekennzeichnet,**
**dass** die Aufnahmeglieder (10, 10') an Zähnen (41) des Abtriebselements (6) vorgesehen sind, die die Führungsschlitze (39, 39') des Abtriebselements (6) voneinander trennen.

14. Abtriebsschnittstelle nach Anspruch 13,
**dadurch gekennzeichnet,**
**dass** die Aufnahmeglieder (10, 10') jeweils eine konkave Stirnfläche (17, 17') aufweisen, die an einen Radius der Arretierscheibe im Arretierabschnitt (15) angepasst sind.

15. Abtriebsschnittstelle nach Anspruche 14,
**dadurch gekennzeichnet,**
**dass** ein Betrag des Krümmungsradiuses der konkaven Stirnfläche (17, 17') zumindest näherungsweise gleich dem Radius der Arretierscheibe im Arretierabschnitt ist.

16. Abtriebsschnittstelle nach einem der Ansprüche 12 bis 15,
**dadurch gekennzeichnet,**
**dass** der Freigabebereich (38) der Arretierscheibe durch eine an der Arretierscheibe vorgesehene Aussparung gebildet ist.

17. Elektrische Antriebseinrichtung (1) mit einem Elektromotor (2), einem Steuergerät (20), das zum Steuern des Elektromotors (2) dient, und einer Abtriebsschnittstelle (3) nach einem der Ansprüche 1 bis 16, wobei der Elektromotor (2) über das Antriebselement (5) das Abtriebselement (6) antreibt und wobei das Steuergerät (20) den Elektromotor (2) zum Freigeben der Arretierung so ansteuert, dass zunächst eine reduzierte Drehzahl des Antriebselements (5) erreicht ist, bis ein Einwirken des Antriebselements (5) auf das Abtriebselements (6) zum Antreiben des Abtriebselements (6) erfolgt.

18. Elektrische Antriebseinrichtung nach Anspruch 17,
**dadurch gekennzeichnet,**
**dass** das Steuergerät (20) einen Motorstrom des Elektromotors (2) erfasst und in Abhängigkeit von dem erfassten Motorstrom die Drehzahl des Elektromotors (2) steuert.
